# EUROPEAN PATENT APPLICATION

(11) **EP 4 435 941 A1**
(43) Date of publication of application: **25.09.2024**
(21) Application number: 22895158.8
(22) Date of filing: 20.07.2022
(51) Int. Cl.: H01M 50/184, H01M 50/107, H01M 50/119, H01M 50/191

(54) **BATTERY**

(30) Priority: 16.11.2021 JP 2021186345
(71) Applicant: Panasonic Intellectual Property Management Co., Ltd., Osaka-shi, Osaka 540-6207 (JP)
(72) Inventor: SHIMIZU Kota, Kadoma-shi, Osaka 571-0057 (JP); KASSAI Takaaki, Kadoma-shi, Osaka 571-0057 (JP); SHIMIZU Kazumichi, Kadoma-shi, Osaka 571-0057 (JP); NAGAO Takeshi, Kadoma-shi, Osaka 571-0057 (JP)
(74) Representative: Novagraaf International SA
(86) International application number: PCT/JP2022/028253
(87) International publication number: WO 2023/089869

(57) **Abstract**

Provided is a battery including: a battery can made of metal and including a tubular part provided at one end with an opening edge part and a bottom part closing another end of the tubular part; an electrode body housed inside the tubular part; and a sealing member bonded to the opening edge part of the battery can to seal an opening of the opening edge part. The sealing member includes a gasket part, a disk part made of metal, a ring part with a center part in which the disk part is crimped with the gasket part interposed between the center part and the disk part, and an intermediate member bonded to an upper surface of the ring part.

## Description

### TECHNICAL FIELD

The present disclosure relates to a battery.

### BACKGROUND ART

Sealed batteries having various configurations have been conventionally known (e.g., see PTL 1). Such a conventional battery includes a battery can with an open end, and the open end of the battery can is sealed. Known examples of a method for sealing the open end include the following method. For example, after an electrode body is housed in the battery can, the battery can is reduced inwardly in diameter near the open end of the battery can. This reduction in diameter causes a protrusion in an annular shape to be formed on an inner peripheral surface of the battery can, and a gasket and a sealing member are placed on the protrusion. Then, the open end of the battery can is crimped onto the sealing member with the gasket interposed therebetween to form a crimped part on the sealing member. This method enables the battery to be sealed to manufacture a sealed battery.

### Citation List

### Patent Literature

PTL 1: Unexamined Japanese Patent Publication No. H07-105933 A

### SUMMARY OF THE INVENTION

Unfortunately, the battery including a groove and the crimped part tends to increase in dimension in a height direction of the battery near a sealing plate because the sealing member is placed on the groove and the crimped part is formed on the sealing member with the gasket interposed therebetween. As a result, the battery described in PTL 1 has a problem that energy density is likely to decrease.

Thus, it is an object of the present disclosure to solve the conventional problem described above, and to provide a battery capable of improving energy density.

A battery according to the present disclosure includes: a battery can made of metal and including a tubular part provided at one end with an opening edge part and a bottom part closing another end of the tubular part; an electrode body housed inside the tubular part; and a sealing member bonded to the opening edge part of the battery can to seal an opening of the opening edge part. The sealing member includes a gasket part, a disk part made of metal, a ring part with a center part in which the disk part is crimped with the gasket part interposed between the center part and the disk part, and an intermediate member bonded to an upper surface of the ring part.

The battery of the present disclosure enables improvement in energy density of the battery.

### BRIEF DESCRIPTION OF THE DRAWINGS

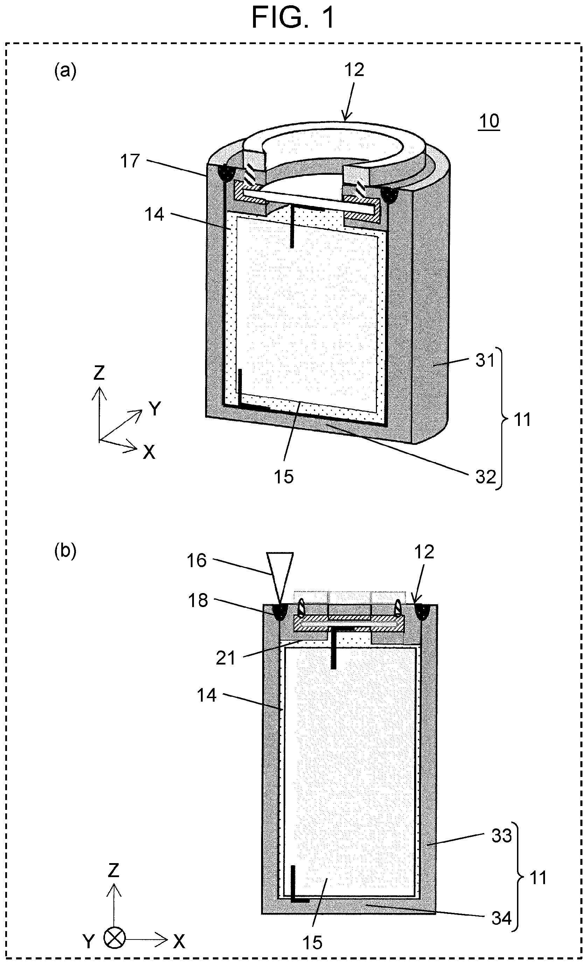

Fig. 1(a) is a schematic perspective sectional view illustrating a sectional structure of a battery according to a first exemplary embodiment of the present disclosure, and Fig. 1(b) is a schematic sectional view illustrating the sectional view of Fig. 1(a) taken along plane Z-X.

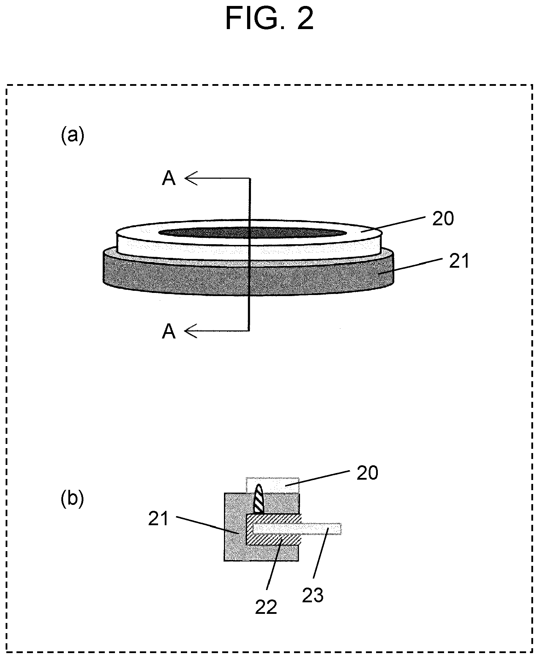

Fig. 2(a) is a schematic perspective view illustrating an appearance of a sealing member in the battery according to the first exemplary embodiment, and Fig. 2(b) is a partial sectional view illustrating a part of a sectional structure of the sealing member of Fig. 2(a) as viewed from direction A-A.

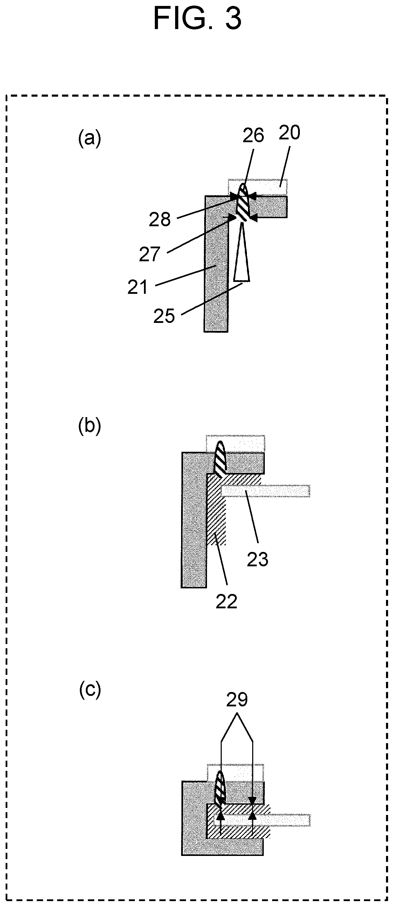

Figs. 3(a) to 3(c) are schematic partial sectional views illustrating respective steps in a method for manufacturing a sealing member.

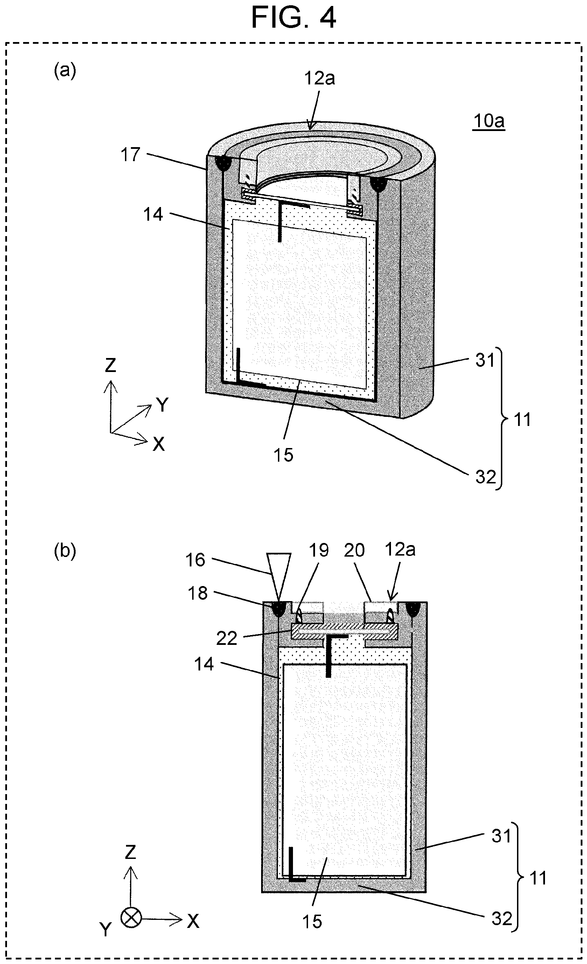

Fig. 4(a) is a schematic perspective sectional view illustrating a sectional structure of a battery according to a first modification of the first exemplary embodiment of the present disclosure, and Fig. 4(b) is a schematic sectional view illustrating the sectional view of Fig. 4(a) taken along plane Z-X.

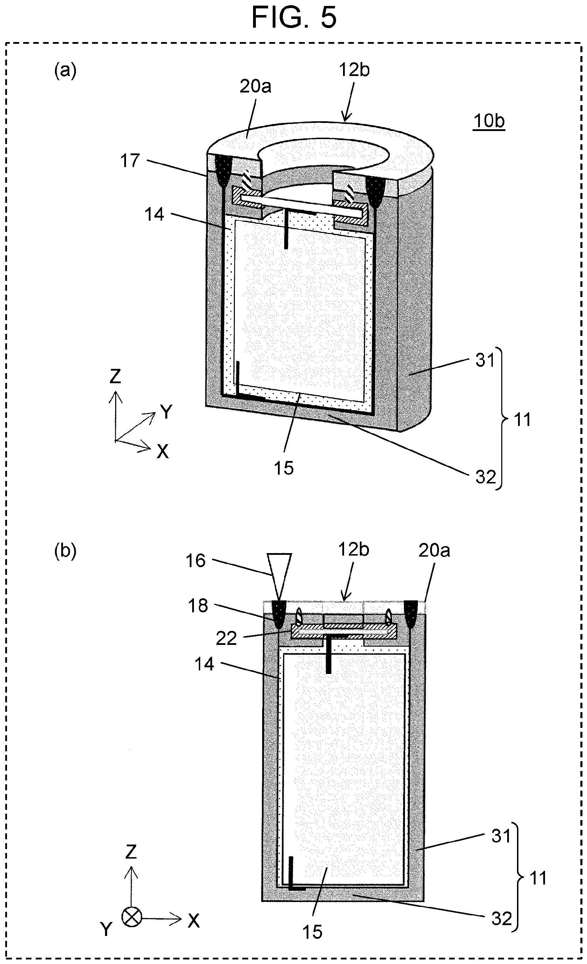

Fig. 5(a) is a schematic perspective sectional view illustrating a sectional structure of a battery according to a second modification of the first exemplary embodiment of the present disclosure, and Fig. 5(b) is a schematic sectional view illustrating the sectional view of Fig. 5(a) taken along plane Z-X.

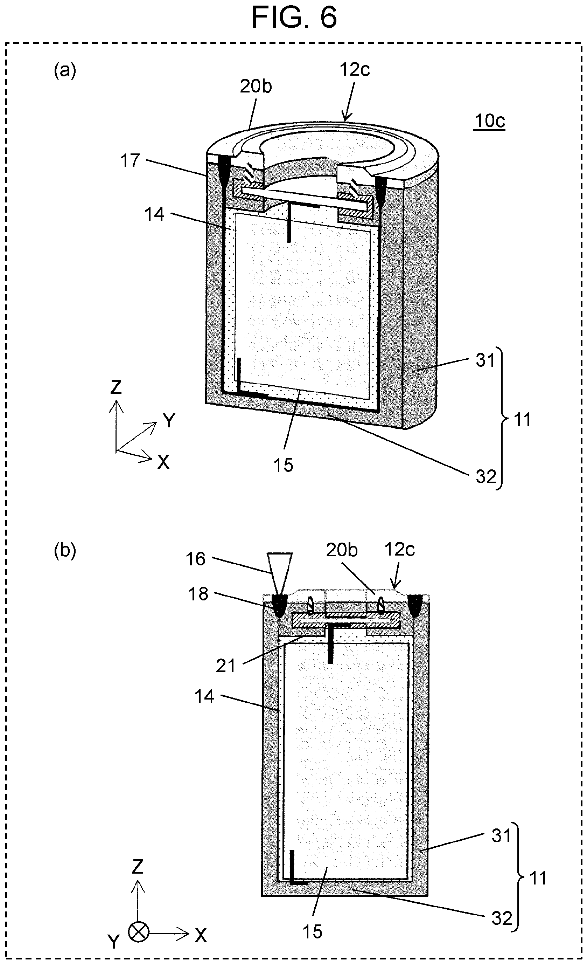

Fig. 6(a) is a schematic perspective sectional view illustrating a sectional structure of a battery according to a third modification of the first exemplary embodiment of the present disclosure, and Fig. 6(b) is a schematic sectional view illustrating the sectional view of Fig. 6(a) taken along plane Z-X.

### DESCRIPTION OF EMBODIMENT

### (Background of present disclosure)

The conventional method for sealing a battery causes the crimped part to be formed resulting in increase in dimension in a longitudinal direction of the battery near the sealing member, and in decrease in energy density of the battery. Thus, to solve the conventional problems, the present inventors have studied a sealed battery capable of sealing the battery can without forming a crimped part by bonding the battery can and the sealing member by welding, for example.

Specifically, the present inventors have studied a method for sealing the battery can by inserting a sealing member into an opening edge part of the battery can and welding a butting surface of the sealing member.

The sealing member of the battery typically includes a gasket made of resin (e.g., polypropylene) that is crimped with a metal member having a thickness of several hundreds µm. When the sealing member and the battery can are to be welded to each other, heat associated with welding is applied to the gasket crimped in the sealing member, and then the gasket is thermally deformed and melted to cause poor airtightness. Here, temperature rise of the gasket will be described in detail. Temperature at a weld where the end of the battery can on an opening edge part side and the end of the sealing member on an outer peripheral side are welded by butt welding rises to a melting point of a metal material used for the battery can and the sealing member (e.g., iron has a melting point of about 1500°C). Meanwhile, the gasket is crimped with a metal member having a thickness of several hundreds µm, and has a distance of also several hundreds µm to the weld. For example, the gasket made of polypropylene has a melting point of 140°C, and has a difference of about 1400°C from the weld, so that the gasket may be melted during welding.

Subsequently, a problem caused by the melting of the gasket will be described in detail. As described above, the sealing member includes the gasket crimped with the metal member having a thickness of several hundreds µm. Crimping is performed to seal two kinds of metal parts different in potential in a battery in an insulated state by crushing resin using a metal member to perform sealing using repulsive force of the resin. Here, when the gasket is melted by welding, the gasket is melted while being crushed by the metal member. Thus, the resin cannot be maintained in a sealed state due to a melted resin material burst out to the outside, for example, so that airtightness may deteriorate. When the airtightness of the sealing member deteriorates, safety as a battery also deteriorates. Thus, the melting of the gasket needs to be avoided in the sealing of the battery.

Then, the present inventors have studied a battery below according to the present disclosure as a battery capable of solving such a problem.

A battery according to an aspect of the present disclosure includes a battery can made of metal, an electrode body, an electrolytic solution, and a sealing member. The battery can includes a tubular part provided at one end with an opening edge part, and a bottom part that closes the other end of the tubular part. The battery can houses an electrode body. The battery can is filled with an electrolytic solution. The sealing member seals the opening edge part of the tubular part of the battery can. The sealing member is fixed while having an outer peripheral surface facing an inner peripheral surface of the opening edge part. Specifically, a part of the inner peripheral surface of the opening edge part and a part of the outer peripheral surface of the sealing member are bonded and fixed by a melted part. The sealing member is provided on its upper surface with an intermediate member made of a metal material having a melting point equal to or lower than the melting point of the metal material of the sealing member.

This kind of configuration enables the intermediate member to suppress heat conduction to a gasket part during bonding between the battery can and the sealing member. That is, when a part of the inner peripheral surface of the opening edge part and a part of the outer peripheral surface of the sealing member are welded, temperature rise of the gasket part due to heat transferred toward the gasket part of the sealing member can be reduced. Reducing the temperature rise of the gasket part enables preventing melting of the gasket part. Thus, reduction in poor airtightness of the sealing member due to heat during welding can be achieved. When the gasket part is melted by welding, the gasket part is melted while being crushed by the metal member. Thus, the resin cannot be maintained in a sealed state due to a melted resin material burst out to the outside, for example, so that airtightness may deteriorate. Thus, the welding enables not only the battery can to be sealed, but also the sealing member to be fixed to the battery can. Unlike the conventional battery, this configuration does not require providing a protrusion in an annular shape (referred to also as a diameter-reduced portion) on the inner peripheral surface of the battery can and a crimped part along the open end of the battery can, so that reduction in distance between the electrode body and the sealing member can be achieved. This configuration enables reduction in volume of the battery can, and thus improves the energy density of the battery, which is a ratio of battery energy to a volume of the battery can.

Each aspect of the present disclosure will be described below.

A battery according to a first aspect includes: a battery can made of metal and including a tubular part provided at one end with an opening edge part and a bottom part closing another end of the tubular part; an electrode body housed inside the tubular part; and a sealing member bonded to the opening edge part of the battery can to seal an opening of the opening edge part. The sealing member includes a ring part with a center part in which a disk part made of metal is crimped with a gasket part interposed between the center part and the disk part, and an intermediate member bonded to an upper surface of the ring part.

In a battery according to a second aspect, in the first aspect, the intermediate member may be made of a metal material having a melting point lower than melting points of the metal of the disk part and the metal of the battery can.

In a battery according to a third aspect, in the first or second aspect, the sealing member may include the ring part and the intermediate member that are bonded to each other by a first melted part.

In a battery according to a fourth aspect, in the third aspect, the first melted part may have a surface in contact with the ring part and the gasket part, and have a melted area on the surface that is larger than a melted area on an interface between the ring part and the intermediate member.

In a battery according to a fifth aspect, in the third or fourth aspect, the first melted part may protrude on the surface in contact with the ring part and the gasket part toward the gasket part.

In a battery according to a sixth aspect, in any one of the first to fifth aspects, the ring part may have an upper surface provided with a recess, and the intermediate member may be bonded to the ring part while being engaged in the recess.

In a battery according to a seventh aspect, in any one of the first to fifth aspects, the intermediate member may have an annular shape, and the annular shape may have a diameter equal to a diameter of the battery can.

In a battery according to an eighth aspect, in the seventh aspect, the annular shape of the intermediate member may have an outer periphery thinner in thickness than an inner periphery.

Hereinafter, a battery according to an exemplary embodiment will be described with reference to the accompanying drawings. The drawings show substantially the same members that are designated by the same reference numerals.

### (First exemplary embodiment)

Hereinafter, the battery of the present disclosure will be specifically described with reference to the drawings.

First, a configuration of battery 10 will be described with reference to Fig. 1. Fig. 1(a) is a schematic perspective sectional view illustrating a sectional structure of battery 10 according to a first exemplary embodiment. Fig. 1(b) is a sectional view of battery 10 according to the first exemplary embodiment. For convenience, a direction toward the opening of battery can 11 is defined as a Z-direction, a direction perpendicular to a Z-axis in a section including the Z-axis is defined as an X-direction, and a direction perpendicular to the Z-axis and an X-axis is defined as a Y-direction.

As illustrated in Fig. 1(a), battery 10 according to the exemplary embodiment includes battery can 11, sealing member 12, electrolytic solution 14, and electrode body 15.

### <Battery can>

Battery can 11 includes tubular part 31 provided at one end with an opening edge part, and bottom part 32 that closes the other end of tubular part 31. Tubular part 31 in the first exemplary embodiment is a cylindrical part, for example, and battery can 11 is a bottomed container having a cylindrical shape in which an upper end in the drawing is open. Battery can 11 is made of metal. Battery can 11 houses electrode body 15, and is filled with electrolytic solution 14. Battery can 11 is sealed by sealing member 12. Battery can 11 is provided inside with a space in which electrode body 15 and electrolytic solution 14 are housed, the space being a sealed space. Thus, battery 10 according to the first exemplary embodiment is a sealed battery.

### <Sealing member>

Sealing member 12 has a center part in which a disk part is crimped with a gasket part interposed therebetween to form a positive electrode part. Sealing member 12 has a disk shape in which the center part protrudes upward from an outer peripheral part because intermediate member 20 to be described later is provided. Sealing member 12 has an outer peripheral surface disposed facing an inner peripheral surface of battery can 11. Sealing member 12 is inserted into battery can 11 to have an upper end of sealing member 12 in the drawing, the upper end being almost flush with the upper end of battery can 11 in the drawing.

### <Electrode body>

Electrode body 15 emits or absorbs electrons or ions into or from battery can 11 depending on its material. Electrode body 15 has two kinds of electrode including a positive electrode and a negative electrode, and has a three-layer structure in which a separator that blocks movement of electrons or ions is sandwiched between the positive electrode and the negative electrode. Although electrode body 15 also has a positive electrode tab and a negative electrode tab through which electrons or ions flow for corresponding one of the positive electrode and the negative electrode, the positive electrode tab and the negative electrode tab are not illustrated in the present drawing.

### <Electrode liquid>

Electrolytic solution 14 is a medium through which electrons or ions emitted from electrode body 15 can move.

### <Method for manufacturing battery>

Battery 10 of the present disclosure is manufactured through the following steps.
(1) First, electrode body 15 is inserted into battery can 11, and electrolytic solution 14 is injected.
(2) Subsequently, sealing member 12 is inserted into battery can 11 to have an upper end of the outer peripheral surface of sealing member 12 in the drawing, the upper end being almost flush with an upper end of the inner peripheral surface of battery can 11 in the drawing as illustrated in Fig. 1(b).
(3) Subsequently, battery can 11 and a part of sealing member 12 are irradiated with melting laser 16, for example. Then, melting laser 16 is swept along a circumferential direction of the outer periphery of sealing member 12. This irradiation forms homogeneous material melted part 18 to bond the outer periphery of sealing member 12 to the inner periphery of tubular part 31. As a result, battery can 11 is sealed, and sealing member 12 is fixed to battery can 11.

Through the above steps, battery 10 of the present disclosure is manufactured.

### <Details of sealing member>

Next, sealing member 12 of battery can 11 will be described in detail with reference to Fig. 2. Fig. 2(a) is a schematic perspective view illustrating an appearance of sealing member 12 in battery 10 according to the first exemplary embodiment, and Fig. 2(b) is a schematic partial sectional view illustrating a part of a sectional structure of sealing member 12 of Fig. 2(a) as viewed from direction A-A.

As illustrated in Fig. 2(b), sealing member 12 includes intermediate member 20, ring part 21, gasket part 22, and disk part 23. Sealing member 12 includes ring part 21 and disk part 23 that are each made of a metal material, and gasket part 22 that is made of a resin material.

Sealing member 12 has a ring shape, for example. Disk part 23 is crimped by ring part 21 with gasket part 22 interposed therebetween. That is, ring part 21 crimps disk part 23 in a center part of ring part 21 with gasket part 22 interposed therebetween as illustrated in Fig. 2(b). Sealing member 12 is electrically insulated from disk part 23 by gasket part 22.

Sealing member 12 is provided on its upper surface with intermediate member 20 made of a metal material having a melting point equal to or lower than the melting point of another metal material of the sealing member.

Ring part 21 is made of a metal material similar to that of battery can 11. Intermediate member 20 is made of a metal material having a melting point lower than a melting point of the metal material constituting ring part 21.

This battery 10 enables intermediate member 20 to suppress heat conduction to gasket part 22 during bonding between battery can 11 and sealing member 12.

### <Method for manufacturing sealing member>

Next, a method for manufacturing sealing member 12 will be described with reference to Fig. 3.
(a) First, intermediate member 20 and ring part 21 are stacked as illustrated in Fig. 3(a), and are heated by laser light from a side of ring part 21 to perform bonding, for example. Specifically, intermediate member 20 is attached to an upper surface of ring part 21, and welding is performed with welding laser 25 from below a lower surface of ring part 21 to form the dissimilar material melted part 26.

Here, ring part 21 has a melting point higher than a melting point of intermediate member 20 as described above, so that heating is performed from a side of a metal material with a high melting point. As a result, the amount of heat transferred to a low melting point side can be reduced, so that generation of an intermetallic compound due to mixing with a metal material on the low melting point side can be suppressed to maintain bonding strength.

Dissimilar material melted part 26 has a relation in size between surface melted width 27 and interface melted width 28 in an interface between sealing member 12 and intermediate member 20, the relation indicating that surface melted width 27 is larger than interface melted width 28. For example, when bonding is performed using a laser, the bonding performed under irradiation conditions, where a wavelength is 1070 nm, output is 250 W, sweeping speed is 500 mm/s, and a spot diameter is 20 µm, causes a surface melted width of about 200 µm, and an interface melted width of about 150 µm.

Here, dissimilar material melted part 26 protrudes by about several tens µm in a melted direction with respect to a surface before welding due to a change in crystal structure due to heat during welding.

(b) Next, gasket part 22 and disk part 23 are inserted into ring part 21 as illustrated in Fig. 3(b).

(c) Finally, disk part 23 is crimped by ring part 21 with gasket part 22 interposed therebetween to manufacture sealing member 12 of battery 10 as illustrated in Fig. 3(c).

Here, ring part 21 with gasket part 22 crimped as illustrated in Fig. 3(c) secures airtightness of the gasket by adhesion between ring part 21 and gasket part 22 and adhesion between gasket part 22 and disk part 23. A degree of this adhesion is improved as gasket compression length 29 is reduced from an original thickness of gasket part 22, gasket compression length 29 being defined as a thickness of gasket part 22 sandwiched between ring part 21 and disk part 23 in a section of sealing member 12 when gasket part 22 is compressed. As described above, dissimilar material melted part 26 protrudes toward gasket part 22, so that gasket compression length 29 in dissimilar material melted part 26 becomes shorter than that at a non-welded position due to the protrusion of dissimilar material melted part 26. Thus, the degree of adhesion of the gasket is improved, so that sealing member 12 including dissimilar material melted part 26 can secure a higher airtight state.

As described above, sealing member 12 illustrated in Fig. 1 has a shape in which the central part protrudes upward from the outer peripheral part because intermediate member 20 is provided. That is, battery 10 is provided on its upper surface with a protrusion. However, the battery desirably has a flat surface.

### (First modification)

A sealing member according to a first modification of the first exemplary embodiment can be manufactured as follows. Fig. 4(a) is a schematic perspective sectional view illustrating a sectional structure of battery 10a according to the first modification of the first exemplary embodiment. Fig. 4(b) is a schematic sectional view illustrating the sectional view of Fig. 4(a) taken along plane Z-X.

Battery 10a includes sealing member 12a. Sealing member 12a includes a ring part having an upper surface with a recess and a protrusion, and is manufactured by fitting intermediate member 20 into the recess of the ring part.

Examples of a merit of the present first modification include high shape stability as a battery because the upper surface of sealing member 12a can be flattened. Conversely, examples of a demerit include crimped structure of sealing member 12a that is more complicated as compared with sealing member 12 in Fig. 1 to cause high cost.

### (Second modification)

Sealing member 12b according to a second modification of the first exemplary embodiment may be further manufactured as follows. Fig. 5(a) is a schematic perspective sectional view illustrating a sectional structure of battery 10b according to the second modification of the first exemplary embodiment, and Fig. 5(b) is a schematic sectional view illustrating the sectional view of Fig. 5(a) taken along plane Z-X.

Battery 10b includes sealing member 12b. Sealing member 12b includes ring part 21 identical in shape to that in Fig. 1, and is manufactured by causing intermediate member 20a to have a diameter equal to that of tubular part 31.

Examples of a merit of the present second modification include simplification of crimped structure and flattening of an upper surface of sealing member 12b both of which are compatible. Additionally, when sealing member 12b is inserted, intermediate member 20a stops at an edge of battery can 11 to enable positioning to be facilitated. Conversely, examples of a demerit include loose melting of homogeneous material melted part 18 that is a weld between battery can 11 and sealing member 12b in Fig. 5(b), the loose melting requiring devising application of melting laser 16 with stronger output.

This structure causes the intermediate member and the battery can to be not necessarily bonded to each other, and only requires sealing member 12b and the battery can to be bonded to each other.

### (Third modification)

A sealing member according to a third modification of the first exemplary embodiment may be further manufactured as follows. Fig. 6(a) is a schematic perspective sectional view illustrating a sectional structure of battery 10c according to the third modification of the first exemplary embodiment, and Fig. 6(b) that is a schematic sectional view illustrating the sectional view of Fig. 6(a) taken along plane Z-X.

Battery 10c includes sealing member 12c. Sealing member 12c includes ring part 21 identical in to that in Fig. 1, and is manufactured by causing intermediate member 20b to have a diameter equal to that of tubular part 31, and causing intermediate member 20b to have a thickness decreasing from its inner periphery toward its outer periphery. This structure enables acquiring a merit as in battery 10b, and improving melting efficiency more than when sealing member 12 is used because a laser irradiated par of intermediate member 20b is thinned during bonding of ring part 21, intermediate member 20b, and battery can 11. Conversely, examples of a demerit include a shape of intermediate member 20b of Fig. 6, the shape being more complicated as compared with intermediate member 20 of Fig. 1 and intermediate member 20a of Fig. 5 to cause high cost.

This structure causes the intermediate member and the battery can to be not necessarily bonded to each other, and only requires sealing member 12c and battery can 11 to be bonded to each other.

Although battery can 11 has a cylindrical shape in the present disclosure, the shape of battery can 11 is not limited to such a shape. For example, the shape of an elliptical tube or a polygonal tube is available.

Although sealing member 12 has a disk shape in which the outer peripheral part protrudes upward from the central part in the present disclosure, the shape of sealing member 12 is not limited to such a shape. Sealing member 12 is only required to have a shape that enables an outer peripheral surface of sealing member 12 to be inserted into the opening edge part of battery can 11, the outer peripheral surface facing the inner peripheral surface of the opening edge part of battery can 11, to seal opening edge part 17.

The configuration of the present disclosure may also work effectively when a plurality of batteries are electrically connected by a current collector plate or the like to manufacture a battery module. At present, the battery module requires current collector plates on a top and bottom of the batteries because a positive electrode of each battery is electrically connected to a sealing member, and a negative electrode thereof is electrically connected to a can bottom. As disclosed in Unexamined Japanese Patent Publication No. 2021-93381, there are some approaches to reduce a required volume of a battery module and improve volume energy density by collecting current collectors on an upper side.

A case where the current collector plate is connected by welding is considered. In many cases, a low resistance metal such as copper or aluminum is used as a material of the current collector plate. A cylindrical secondary battery includes a sealing member serving as a positive electrode that is often made of aluminum, and a can that is often made of iron. This case requires dissimilar material welding of aluminum or copper, and iron, so that degree of difficulty in welding increases. In contrast, the present configuration requires a metal having high thermal conductivity, such as aluminum or copper, to be bonded onto the sealing member. When homogeneous materials are selected for metal boned onto a sealing member and a bus bar member that electrically connects batteries, homogeneous material welding can be performed when the battery module is produced. This welding leads to easy welding for an EV manufacturer or the like who purchases a battery and assembles a battery module.

However, even when a metal material having a melting point equal to or lower than a melting point of the metal material of the sealing member is bonded to the upper surface of the sealing member, dissimilar material welding is performed as described above, and thus causing a problem that the degree of difficulty in welding increases. In particular, to obtain a sufficient heat dissipation effect, a metal material greatly different in melting point from iron that is mainly a material of the sealing member, such as aluminum or copper, needs to be used. This dissimilar material bonding causes a fragile layer called an intermetallic compound layer in a bonded part depending on a combination of metal materials. The intermetallic compound layer influences difficulty in obtaining sufficient bonding strength for bonding the metal material to the upper surface of the sealing member.

The intermetallic compound layer is generally generated when metals different in melting point are mixed with each other. When a metal material is bonded to the sealing member, such as when welding is performed, generally, the metal material and the sealing member are brought into close contact with each other, and welding is performed by applying heat from a side of the metal material. This case causes heat to be applied from a side of metal having a low melting point, so that most of the metal having a low melting point is melted first during the welding. When a metal material having a high melting point subsequently melts with a time lag, the metal material having a high melting point is mixed with the metal having a low melting point to generate an intermetallic compound, and thus deteriorating bonding strength of a weld.

To obtain sufficient bonding strength in bonding between dissimilar materials greatly different in melting point, processing from a side of a metal material having a high melting point is important. To achieve this processing, the present configuration proposes a method for bonding dissimilar materials in a step of manufacturing a sealing member.

The present disclosure also includes an appropriate combination of appropriate exemplary embodiments and/or examples among the various above-described exemplary embodiments and/or examples, and effects of the respective exemplary embodiments and/or examples can be achieved.

### INDUSTRIAL APPLICABILITY

The battery according to the present disclosure can be used for various can type batteries, and is useful for application as a power source for a mobile device, a hybrid vehicle, and an electric vehicles, for example.

### REFERENCE MARKS IN THE DRAWINGS

10, 10a, 10b, 10c: battery
11: battery can
12, 12a, 12b, 12c: sealing member
14: electrolytic solution
15: electrode body
16: melting laser
17: opening edge part
18: homogeneous material melted part
20, 20a, 20b: intermediate member
21: ring part
22: gasket part
23: disk part
25: welding laser
26: dissimilar material melted part
27: surface melted width
28: interface melted width
29: gasket compression length
31: tubular part
32: bottom part

## Claims

1. A battery comprising:
a battery can made of metal and including a tubular part and a bottom part, the tubular part being provided at one end of the battery can with an opening edge part, the bottom part closing another end of the tubular part;
an electrode body housed inside the tubular part; and
a sealing member bonded to the opening edge part of the battery can to seal an opening of the opening edge part,
the sealing member including:
a gasket part;
a disk part made of metal;
a ring part with a center part in which the disk part is crimped with the gasket part interposed between the center part and the disk part; and
an intermediate member bonded to an upper surface of the ring part.

2. The battery according to Claim 1, wherein the intermediate member is made of a metal material having a melting point lower than melting points of the metal of the disk part and the metal of the battery can.

3. The battery according to Claim 1 or 2, wherein the sealing member includes the ring part and the intermediate member that are bonded to each other by a first melted part.

4. The battery according to Claim 3, wherein the first melted part has a surface in contact with the ring part and the gasket part, and has a melted area on the surface that is larger than a melted area on an interface between the ring part and the intermediate member.

5. The battery according to Claim 3 or 4, wherein the first melted part protrudes on the surface in contact with the ring part and the gasket part toward the gasket part.

6. The battery according to any one of Claims 1 to 5, wherein the ring part has an upper surface provided with a recess, and the intermediate member is bonded to the ring part while being engaged in the recess.

7. The battery according to any one of Claims 1 to 5, wherein the intermediate member has an annular shape, and the annular shape has a diameter equal to a diameter of the battery can.

8. The battery according to Claim 7, wherein the annular shape of the intermediate member has an outer periphery thinner in thickness than an inner periphery.
